# EUROPÄISCHE PATENTANMELDUNG

(11) **EP 1 126 684 A1**
(43) Veröffentlichungstag der Anmeldung: **22.08.2001**
(21) Anmeldenummer: 00810124.8
(22) Anmeldetag: 14.02.2000
(51) Int. Cl.: H04M 1/60

(54) **Verfahren zum Steuern einer Lautstärke eines elektroakustischen Wandlers**

(71) Anmelder: Ascom AG, 3000 Bern 14 (CH)
(72) Erfinder: Baiker, Stefan, 4053 Basel (CH); Tschanz, Rudolf, 4513 Langendorf (CH)
(74) Vertreter: Roshardt, Werner Alfred, Dipl.-Phys.

(57) **Zusammenfassung**

Es wird die Lautstärke eines elektroakustischen Wandlers (6) eines Gerätes (1) so geregelt, dass ein durch ein akustisches Leck bedingter Verlust im Schalldruck bestmöglich kompensiert wird. Das Gerät (1) ist z. B. ein Hörer eines Telefons, ein Handfunktelefon, ein Schnurlostelefon oder dergleichen. Zwischen dem Hörer, bzw. dessen Hörmuschel (3) und dem Ohr (16) des Benutzers wird ein variabler Zwischenraum (22) gebildet. Mit einem akustischen Sensor (11) wird der Schalldruck im Zwischenraum (22) gemessen. Mit einer Regelschaltung (9) wird die Leistung des Lautsprechers (6) in Abhängigkeit vom gemessenen Schalldruck geregelt. Der akustische Sensor (11) ist z. B. ein Mikrofon, welches in einem getrennten Raumvolumen (14) neben dem Lautsprecher (6) angeordnet ist.

## Beschreibung

### Technisches Gebiet

Die Erfindung betrifft ein Verfahren zum Steuern einer Lautstärke eines elektroakustischen Wandlers eines Gerätes zum Übertragen akustischer Signale an einen in der Nähe befindlichen Schallempfänger, wobei zwischen dem Gerät und dem Schallempfänger ein variabler Zwischenraum gebildet wird. Ferner betrifft die Erfindung eine Vorrichtung zur Durchführung des Verfahrens.

### Stand der Technik

Telefoniert wird schon immer unter den verschiedensten Umgebungsbedingungen. Entsprechend unterschiedlich sind die Hintergrundgeräusche. Dies trifft namentlich für Handys zu, welche nicht nur in mehr oder weniger ruhigen Räumen, sondern auch auf der Strasse, auf Baustellen etc. verwendet werden. Es liegt auf der Hand, dass die Verständlichkeit des Lautsprechersignals bei einem erhöhten Geräuschpegel reduziert ist. Entsprechend wird der Benutzer das Telefon stärker ans Ohr pressen müssen. Dies kann aber unangenehm sein. Umgekehrt kann es auch sein, dass der Schallpegel des elektroakustischen Wandlers des Telefonhörers als zu hoch empfunden wird, so dass der Hörer in einem gewissen Abstand zum Ohr gehalten werden muss.

Aus der EP 0 909 110 A2 ist eine Hörmuschel (für ein Telefon oder dergleichen) bekannt, bei welcher auf akustischem Weg eine möglichst gute Abstrahlung akustischer Leistung sichergestellt wird. Zu diesem Zweck ist die Rückseite des Lautsprechers (dessen Vorderseite das eigentliche Nutzsignal abstrahlt) zu einem Volumen hin offen, welches seinerseits über seitliche Kanäle und separate Öffnungen ebenfalls direkt an den zwischen Ohr und Hörmuschel gebildeten akustischen Raum angekoppelt ist. Mit dem beschriebenen akustischen Konzept wird die sogenannte "Leak Toleranz" erhöht. D. h. trotz der variablen akustischen Last, welche der sich naturgemäss immer wieder ändernde akustische Raum zwischen Ohr und Hörmuschel darstellt, wird ein grösstmöglicher Teil von der Hörmuschel nach aussen an das Ohr abgestrahlt. Das sogenannte "akustische Leck" wird also bis zu einem gewissen Grad auf direktem akustisch-analogem Weg kompensiert.

Um die Bedienung von Handys zu vereinfachen, ist schon vorgeschlagen worden, automatisch zwischen einem Hörer-Modus und einem Freisprech-Modus umzuschalten (EP 0 564 160 B1). Dazu wird im Handy ein Sensor zum Messen des Abstandes zum Kopf des Benutzers eingebaut. Wird ein bestimmter Abstand überschritten, wird der elektroakustische Wandler der Hörmuschel in einem Freisprech-Modus betrieben. In diesem Zusammenhang wurde auch vorgeschlagen, die Lautstärke der Hörmuschel in Abhängigkeit vom gemessenen Abstand einzustellen, solange der als Grenze vorgegebene Abstand nicht überschritten wird.

Die Wirkung dieser bekannten Kompensation vermag das eingangs genannte Problem aber nicht befriedigend zu beheben.

### Darstellung der Erfindung

Aufgabe der Erfindung ist es, ein Verfahren und eine Vorrichtung der eingangs genannten Art anzugeben, welche eine situationsgerechte Einstellung des vom elektroakustischen Wandler abgestrahlten akustischen Signals ermöglichen.

Die Lösung der Aufgabe ist durch die Merkmale des Anspruchs 1 definiert. Gemäss der Erfindung wird ein Gerät, welches einen elektroakustischen Wandler zum Übertragen akustischer Signale an einen in der Nähe befindlichen Schallempfänger (menschliches Ohr) aufweist, mit einem akustischen Sensor (z. B. einem dynamischen Mikrofon) ausgestattet bzw. gekoppelt, welches den im akustischen Zwischenraum zwischen Gerät und Schallempfänger vorhandenen Schalldruck misst. Auf der Basis dieser Messung wird die Leistung des elektroakustischen Wandlers gesteuert bzw. geregelt.

Der genannte Schalldruck ist natürlich von einer Mehrzahl von Parametern abhängig. Von Bedeutung ist, dass nicht nur das "akustische Leck" sondern auch der Abstand zwischen dem Gerät und dem Ohr des Benutzers einen Einfluss hat. Dieser Einfluss kann natürlich dadurch selektiv verstärkt werden, dass ein Richtmikrofon eingesetzt wird, welches besonders gut auf die vom Ohr reflektierte akustische Leistung reagiert. Insgesamt ergibt sich der Vorteil, dass innerhalb eines verhältnismässig grossen Leistungsbereiches die Lautstärke (bzw. die spektrale Verteilung der Signal-Leistung) des Lautsprechers automatisch geregelt werden kann.

Vorzugsweise werden der elektroakustische Wandler und der akustische Sensor derart angeordnet, dass ein Rückkopplungseffekt entsteht, der mit abnehmender Geschlossenheit des akustischen Raumes abnimmt. Der Abstand zwischen Gerät und Ohr des Benutzers braucht nicht immer massgeblich zu sein. Eine relative seitliche Verschiebung von Ohr und Gerät kann unter Umständen zu einem spürbaren akustischen Leck führen und damit zu einer geringen Verständlichkeit.

Wie bereits erwähnt, kann auch ein akustischer Sensor eingesetzt werden, welcher besonders auf die Veränderung des Abstandes zwischen Gerät und Ohr reagiert.

Bei einer von mehreren möglichen Ausführungsformen ist die Regelschaltung so ausgebildet, dass die durch ein akustisches Leck bedingten Verluste im Schalldruck (nach Bedarf bestmöglich) kompensiert werden. Ziel ist es dabei, den subjektiven Eindruck der Lautstärke und damit der Verständlichkeit des Sprachsignals immer etwa im gleichen Bereich zu halten. Weil das subjektive Empfinden der Lautstärke nicht allein von der physikalischen Gesamtleistung des akustischen Signals abhängt sondern auch von der Verteilung der Energie innerhalb des Signalspektrums, kann es unter bestimmten Umständen Sinn machen, die Leistung für bestimmte spektrale Anteile selektiv zu regeln (bzw. zu verstärken).

Vorzugsweise erfolgt die Regelung auf der Basis von Frequenzen im unteren Teil des akustisch relevanten Frequenzbereiches. Das heisst aus dem akustischen Signal wird - entweder durch den akustischen Sensor selbst oder durch eine nachgeschaltete Filterschaltung (z. B. in einem DSP) - ein vorgegebener Frequenzbereich extrahiert, so dass die Leistung des elektroakustischen Wandlers auf der Basis der Leistung des extrahierten Frequenzbereiches gesteuert wird.

Soweit überhaupt eine selektive Rückkopplung erwünscht ist, kann diese natürlich auch mit einem beliebigen Filter durchgeführt werden (um z. B. die für die Verständlichkeit relevanten Frequenzbereiche besonders zu gewichten).

Eine interessante Anwendungsmöglichkeit für die Erfindung ergibt sich aus den folgenden Überlegungen: Einerseits ist es erforderlich, dass der Lautsprecher eines Telefonhörers, Handys etc., genügend laut ist, damit die Verständlichkeit gewährleistet bleibt, auch wenn der Hörer nicht direkt am Ohr liegt, andererseits darf er auch nicht zu laut eingestellt sein (damit die Schmerzgrenze nicht überschritten wird). Durch die erfindungsgemässe Rückkopplung ist es nun möglich, dieses Problem zu lösen. Die Grösse des akustischen Lecks (welche durch das Verhältnis zwischen abgestrahltem und gemessenem akustischem Signal zum Ausdruck gebracht wird) kann dazu verwendet werden festzustellen, ob die Hörmuschel zu weit vom Ohr entfernt ist. In einem solchen Fall kann der elektroakustische Wandler des Hörers in einen zum Freisprechen geeigneten Betrieb umgeschaltet werden.

Der elektroakustische Wandler und der akustische Sensor sind im Gerät bzw. in dessen Hörmuschel z. B. unmittelbar nebeneinander angeordnet aber in akustisch getrennten Raumvolumen. Die beiden genannten Raumvolumen sind mit Öffnungen versehen, welche in aneinander angrenzenden Oberflächenbereichen (Ohrauflage) des Gehäuses angeordnet sind. Ziel und Nutzen dieser Ausführungsform liegen in einer kompakten Bauweise. Gemäß einer besonders bevorzugten Ausführungsform sind die beiden Raumvolumen quasi ineinander verschachtelt angeordnet, wobei sich die Öffnungen für den akustischen Sensor mehr oder weniger im Zentrum des Bereiches befinden, welcher durch die für den akustischen Wandler vorgesehenen Öffnungen eingenommen wird.

Damit ist aber keineswegs ausgeschlossen, dass die beiden Elemente bei Bedarf auch in einem Abstand zueinander oder sogar in getrennten Gehäusen vorgesehen sind.

Typischerweise sind in einem als Hörmuschel ausgebildeten Gehäusebereich mehrere Öffnungen für den Austritt des Schalls des elektroakustischen Wandlers und mindestens eine Öffnung für den Eintritt des Schalls zum akustischen Sensor vorgesehen. Der genannte Gehäusebereich ist in der Regel relativ flach. Es soll möglichst keine direkte Überkopplung des aus den erstgenannten Öffnungen austretenden Schalls zur zweitgenannten Öffnung für den akustischen Sensor möglich sein. Vielmehr soll der Schall hauptsächlich durch den Schallempfänger (Ohr des Benutzers) gestaut bzw. reflektiert werden, bevor er zum akustischen Sensor gelangt (indirekte Kopplung).

Der akustische Sensor wird zum Beispiel durch eine Mikrofonkapsel gebildet, welche in einem abgegrenzten Raumvolumen derart angeordnet ist, dass zwischen der Öffnung, durch welche der zu detektierende Schall eintritt, und der Kapsel ein leeres Raumvolumen vorhanden ist. Die Ausführung dieses Raumvolumens hängt natürlich von den technischen Erfordernissen der Mikrofonkapsel ab.

Ein wichtiges Anwendungsgebiet der Erfindung ist der Bereich der Telefon- oder Funkgeräte. In erster Linie ist an Handfunktelefone (Handys, Cordless Telephone) mit der zusätzlichen Möglichkeit des Freisprechens zu denken. Es gibt aber auch andere Geräte, die eine Lautstärkenregelung (bzw. eine selektive spektrale Leistungssteuerung) in Abhängigkeit vom Abstand des Ohres benötigen können. Zu erwähnen sind beispielsweise Gegensprechanlagen. Bei diesen ist es häufig so, dass der Benutzer entweder zu wenig nahe herangeht und wegen der unerwartet kleinen Lautstärke fast nichts versteht oder dass er zu nahe herangeht und sein Gehör dann wegen der zu hohen Lautstärke betäubt wird.

Wenn der Benutzer das Gerät eng an sein Ohr nimmt, ist nicht nur das akustische Leck gering sondern gleichzeitig auch das Sprechmikrofon in einer empfangsgünstigen Position nahe beim Mund des Benutzers. Die Erfindung schlägt nun weiter vor, auf der Basis des gemessenen akustischen Lecks die Empfindlichkeit des Sprechmikrofons des Gerätes (Sprechmuschel) einzustellen bzw. zu verändern (z. B. je geringer das akustische Leck, desto geringer die Empfindlichkeit des Sprechmikrofons).

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendete Zeichnung zeigt:

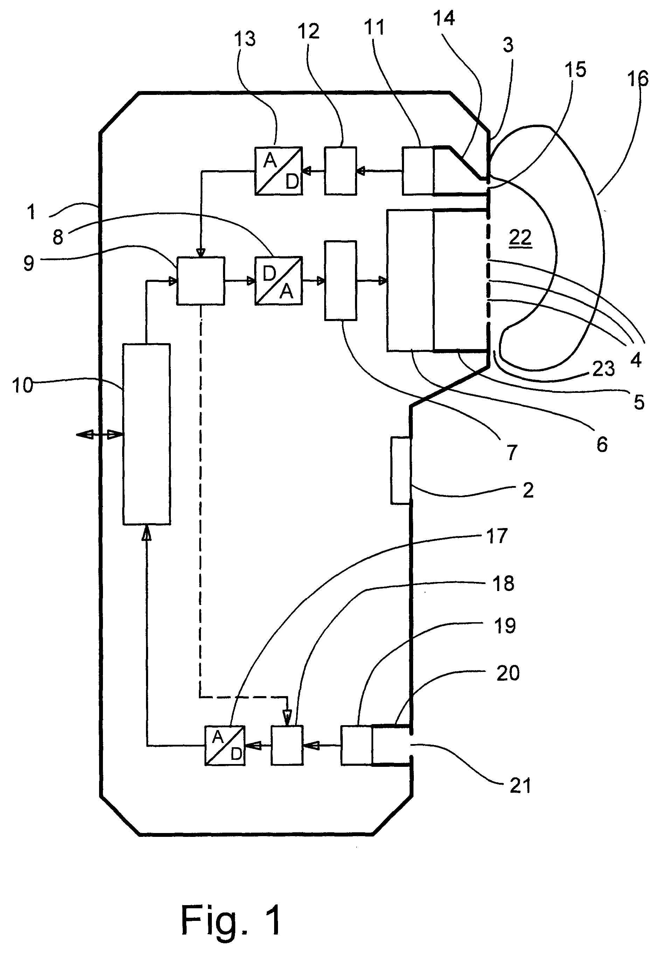

- Fig. 1: eine schematische Darstellung eines Hörers mit einer Regelschaltung zum Steuern des Lautsprechers.

### Wege zur Ausführung der Erfindung

In Fig. 1 ist andeutungsweise ein Handapparat 1 eines Telefons gezeigt. Dieser kann mit Bedienungselementen z. B. mit einer optischen Anzeige 2 (Display), einer Tastatur (nicht dargestellt) oder dergleichen ausgestattet sein (wie es zum Beispiel für Handys oder Schnurlostelefone üblich ist). In einem als Hörmuschel 3 ausgebildeten Bereich des Gehäuses ist eine Mehrzahl von Öffnungen 4 vorgesehen. Die Öffnungen 4 stellen den akustischen Ausgang eines Raumvolumens 5 dar, in welchem ein Lautsprecher 6 (elektroakustischer Wandler) eingebaut ist. Der Lautsprecher 6 wird in an sich bekannter Weise durch einen Verstärker 7 angesteuert. Der Verstärker 7 wird mit analogen Sprachsignalen beaufschlagt, welche von einem anderen Telefongerät auf digitalem Weg an die Telefonschaltung 10 des Handapparates 1 übertragen worden sind.

Der Handapparat 1 hat auch ein Mikrofon 19 im Bereich der Sprechmuschel (welche am unteren Ende der Frontseite des Handapparates 1 angeordnet ist). Das Mikrofon 19 nimmt den vom Gerät zu übertragenden Schall auf, welcher durch eine Öffnung 21 des Gehäuses und ein hinter der Öffnung 21 angeordnetes Raumvolumen 20 eintritt. Ein Verstärker 18 bereitet das Signal in an sich bekannter Weise auf, so dass es von einem A/D-Wandler 17 digitalisierten und an die Telefonschaltung 10 abgegeben werden kann (für die Übertragung an ein nicht dargestelltes Gerät des Gesprächspartners).

Im Rahmen der Erfindung werden die digitalen Signale am Ausgang der Telefonschaltung 10 zunächst durch einen digitalen Signalprozessor 9 (DSP) verarbeitet, bevor sie über den D/A-Wandler 8 an den Verstärker 7 ausgegeben werden. Der DSP 9 hat einen zusätzlichen Eingang für die von einem Mikrofon 11 aufgenommenen, von einem Verstärker 12 aufbereiteten und von einem A/D-Wandler 13 digitalisierten Signale.

Das Mikrofon 11 befindet sich am hinteren Ende eines Raumvolumens 14. Am vorderen Ende hat das genannte Raumvolumen 14 eine Öffnung 15, welche neben den Öffnungen 4 in der Hörmuschel 3 plaziert ist. Die beiden Raumvolumen 5 und 14 sind durch Zwischenwände getrennt und akustisch entkoppelt.

Bei der Benutzung des Handapparates 1 läuft folgendes ab: Die akustischen Signale des Lautsprechers 6 werden durch die Öffnungen 4 an das Ohr 16 des Benutzers abgestrahlt.

Im Zwischenraum 22, welcher zwischen der Hörmuschel 3 und dem Ohr 16 gebildet wird, baut sich ein bestimmter Schallpegel auf. Dieser hängt davon ab, wie stark der genannte Zwischenraum 22 aufgrund des Kontaktes zwischen dem Ohr 16 und der Hörmuschel 3 abgeschlossen ist. Bei einem engen Kontakt ist das akustische Leck relativ klein. Entsprechend ist der vom Mikrofon 11 gemessene Schalldruck verhältnismässig hoch. Das elektrische Signal des Mikrofons 11 wird durch den Verstärker 12 im erforderlichen Mass verstärkt und über den A/D-Wandler 13 an den DSP *9* abgegeben. Ist dagegen an einer Stelle ein Spalt 23 (akustisches Leck) zwischen Ohr 16 und Hörmuschel 3 (Ohrauflage) vorhanden, baut sich im Zwischenraum 22 ein geringerer Schalldruck auf. Infolgedessen wird das Messsignal im Verhältnis zur abgestrahlten akustischen Leistung des Lautsprechers 6 kleiner sein.

Der DSP 9 verwendet das vom Mikrofon 11 gelieferte Messsignal, um die Leistung des Verstärkers 7 und damit des Lautsprechers 6 optimal einzustellen. Je größer das Verhältnis "Messsignal zu abgestrahltem Signal", desto geringer die eingestellte Lautstärke. Umgekehrt wird bei einer im Verhältnis zum abzustrahlenden Signal geringen Stärke des Messsignals die Leistung des Verstärkers 7 hochgeschraubt, damit der Benutzer trotz des hohen akustischen Lecks den Gesprächspartner verstehen kann.

Es gibt verschiedene Möglichkeiten, das gemessene Signal zur Regelung zu verwenden. Es kann z. B. einfach die gesamte Leistung ermittelt werden. Es kann aber auch mit einem Filter ein bestimmter Spektralbereich herausgeholt werden und die Leistung in diesem Bereich als Regelgrösse verwendet werden. In diesem Sinn kann z. B. die untere Hälfte des Spektralbereichs des Signals extrahiert werden. Häufig werden nämlich die oberen Frequenzen ohnehin relativ gut übertragen und sind daher nicht kritisch.

Die Art der Filterung kann auch davon abhängen, von welcher Art die Lautsprecherkapsel ist. Der Effekt des akustischen Lecks, nämlich dass tiefere Frequenzen schwächer erscheinen, ist bei piezo-elektrischen Lautsprecherkapseln deutlicher als bei magnetischen Kapseln.

Im DSP 9 kann z. B. ein PID-Regler implementiert sein. Es können aber auch prädiktive Steuerungen eingesetzt werden. Denkbar ist auch, dass eine Tabelle abgespeichert ist, aus welcher sich zu jedem Wert des Messsignals ein vorbestimmter Ausgabewert für den Verstärkungsfaktor ergibt. Es kann auch eine stufenförmige Schaltkurve realisiert werden. D. h. es wird zwischen zwei, drei oder mehr diskreten Sollwerten hin und her geschaltet.

Es empfiehlt sich, bei der Regelung der Lautstärke des Lautsprechers 6 das von der Telefonschaltung 10 abgegebene Nutzsignal zu berücksichtigen. Bei geringem akustischem Leck wird das vom Mikrofon 11 aufgenommene Signal bis auf einige Verzerrungen (welche durch die akustische Übertragung zwischen Lautsprecher 6 und Mikrofon 11 bedingt sind) dem von der Telefonschaltung 10 gelieferten "Soll-Signal" entsprechen. Der DSP 9 wird in diesem Fall dafür sorgen, dass das geringe akustische Leck kompensiert wird.

Die Kompensation ist bei geringen Abständen von z. B. weniger als 1 cm gut möglich. Bei einigen wenigen Zentimetern wird das akustische Leck schon schnell recht gross sein. Wird der Hörer ganz vom Ohr entfernt, fällt der Schalldruck zusammen, was dank der Rückführung über Mikrofon 11, Verstärker 12, A/D-Wandler 13 zum DSP 9 festgestellt wird. In dieser Situation kann der DSP 9 auf den Freisprechbetrieb umschalten. In diesem Zusammenhang kann auch das Signal des Mikrofons 19 der Sprechmuschel bei Bedarf mehr verstärkt werden als üblich, um den vermutlich grösseren Abstand zwischen Sprechmuschel des Handapparates 1 und Kopf des Benutzers zu kompensieren. Die Steuerung des Verstärkers 18 kann vom DSP 9 aus erfolgen.

Aus dem oben Gesagten ergibt sich, dass das akustische Leck im Prinzip nur dann festgestellt werden kann, wenn der Lautsprecher ein akustisches Signal abstrahlt. Sollen in längeren Pausen Messungen durchgeführt werden, können auch von Zeit zu Zeit Testsignale erzeugt und vom Lautsprecher abgegeben werden. Allerdings können solche Testsignale vom Benutzer als störend empfunden werden.

In kürzeren Signal-Pausen kann der zuletzt benutzte Verstärkungsfaktor beibehalten werden. Bei längeren Pausen kann es sinnvoll sein, den Verstärkungsfaktor auf einen bestimmten Wert überzuführen.

Selbstverständlich beschränkt sich die Erfindung nicht auf das dargestellte Ausführungsbeispiel. Insbesondere kann die Steuerung auch mit analogen elektronischen Komponenten und damit analogen Signalen realisiert werden. Es ist auch möglich, die erfindungsgemässe elektronische Kompensation mit der aus dem Stand der Technik bekannten akustischen Rückkopplung des Verstärkers zu kombinieren. Die akustische Rückkopplung sorgt dann für eine optimale Effizienz der Abstrahlung zum Ohr hin. Der akustische Sensor ermöglicht eine Verbesserung insbesondere bei erhöhtem akustischen Leck.

In der Fig. 1 ist zwar das Raumvolumen 14 getrennt vom Raumvolumen 5 dargestellt. Es ist aber auch möglich, das Raumvolumen 14 und den akustischen Sensor innerhalb (z. B. im Zentrum) des Raumvolumens 5 anzuordnen. Ferner könnte eine Art "Meßkanal" hinter einer der Öffnungen 4 angeschlossen werden, welcher den Schalldruck aus dem Bereich des Raumvolumens 5 hinaus zum Mikrofon 11 führt.

Stellt der DSP 9 fest, daß das akustische Leck zu groß ist, als daß das Gerät im normalen Hörer-Modus sinnvoll betrieben werden kann, schaltet er auf eine hohe Leistung um, so daß im Freisprech-Modus telefoniert werden kann. Es ist sogar denkbar, eine automatische Umschaltung auf einen externen Lautsprecher vorzusehen. Zu diesem Zweck könnte der DSP 9 noch einen Ausgang zur Telefonschaltung 10 haben. Stellt der DSP 9 fest, dass das akustische Leck zu gross ist, signalisiert er dies der Telefonschaltung 10, welche ihrerseits dann das Sprachsignal nicht mehr (bzw. nicht mehr nur) an den Lautsprecher 6 sondern (zusätzlich) an einen (nicht dargestellten) leistungsfähigeren Lautsprecher (welcher z. B. in der zugeordneten Tischstation oder auch direkt im Handapparat integriert sein kann, oder welcher auch durch den über Kabel angeschlossenen Fahrzeuglautsprecher gebildet sein kann).

Bei einem drahtgebundenen Handapparat wird die Telefonschaltung im Normalfall in der Tischstation eingebaut sein. Bei einem Handy sind andererseits zusätzliche HF-Schaltungen für den Empfang der Funksignale vorgesehen. Die Erfindung kann aber auch bei Kopfhörern oder dergleichen eingesetzt werden, um die Lautstärke und/oder das Signalspektrum auch bei nicht optimaler Plazierung des Kopfhörers automatisch richtig einstellen zu können.

Zusammenfassend ist festzustellen, dass durch die Erfindung die Möglichkeit geschaffen worden ist, die Lautstärke (bzw. das Spektrum) der Hörmuschel in Abhängigkeit von den jeweiligen Bedingungen richtig einzustellen.

## Patentansprüche

1. Verfahren zum Steuern eines elektroakustischen Wandlers (6) eines Gerätes (1) zum Übertragen akustischer Signale an einen in der Nähe befindlichen Schallempfänger (16), wobei zwischen dem Gerät (1) und dem Schallempfänger (16) ein variabler Zwischenraum (22) gebildet wird, dadurch gekennzeichnet, dass mit einem akustischen Sensor (11) ein Schalldruck im Zwischenraum (22) gemessen wird und dass eine Leistung des elektroakustischen Wandlers (6) in Abhängigkeit davon geregelt wird.

2. Verfahren nach Anspruch 1, dadurch gekennzeichnet, dass die Leistung des elektroakustischen Wandlers (6) so geregelt wird, dass ein durch ein akustisches Leck bedingter Verlust im Schalldruck kompensiert wird.

3. Verfahren nach einem der Ansprüche 1 oder 2, dadurch gekennzeichnet, dass nur ein Teil, insbesondere ein unterer Teil, eines Frequenzbereiches des Schalldruckes zum Regeln verwendet wird.

4. Verfahren nach einem der Ansprüche 1 bis 3, dadurch gekennzeichnet, dass der elektroakustische Wandler (6) auf einen Freisprech-Modus umgeschaltet wird, wenn der gemessene Schalldruck einen bestimmten Wert unterschreitet.

5. Gerät mit einem elektroakustischen Wandler (6) zum Übertragen akustischer Signale an einen in der Nähe befindlichen Schallempfänger (16), wobei zwischen dem Gerät (1) und dem Schallempfänger (16) ein variabler Zwischenraum (22) gebildet wird, dadurch gekennzeichnet, dass ein akustischer Sensor (11) zum Messen eines Schalldruckes im Zwischenraum (22) und eine Regelschaltung zum Steuern einer Leistung des elektroakustischen Wandlers (6) in Abhängigkeit vom gemessenen Schalldruck vorgesehen sind.

6. Gerät nach Anspruch 5, dadurch gekennzeichnet, dass der elektroakustische Wandler (6) und der akustische Sensor (11) derart angeordnet und ausgerichtet sind, dass ein Rückkopplungseffekt entsteht, der mit zunehmendem akustischem Leck abnimmt.

7. Gerät nach Anspruch 5 oder 6, dadurch gekennzeichnet, dass die Regelschaltung so ausgebildet ist, dass ein durch ein akustisches Leck bedingter Verlust im Schalldruck durch eine Erhöhung der Leistung des elektroakustischen Wandlers (6) kompensiert wird.

8. Gerät nach einem der Ansprüche 5 bis 7, dadurch gekennzeichnet, dass die Regelschaltung so ausgebildet ist, dass nur ein Teil, insbesondere ein unterer Teil, eines Spektralbereiches des Schalldruckes zum Regeln verwendet wird.

9. Gerät nach einem der Ansprüche 5 bis 8, dadurch gekennzeichnet, dass die Regelschaltung so ausgebildet ist, dass der elektroakustische Wandler (6) auf einen leistungsstarken Freisprech-Modus umgeschaltet wird, wenn das Verhältnis zwischen Messignal und abgestrahltem Signal einen bestimmten Wert unterschreitet.

10. Gerät nach einem der Ansprüche 5 bis 9, dadurch gekennzeichnet, dass der elektroakustische Wandler (6) und der akustische Sensor (11) nebeneinander, aber in akustisch getrennten Raumvolumen (5, 14) angeordnet sind.

11. Gerät nach einem der Ansprüche 5 bis 10, dadurch gekennzeichnet, dass in einem als Hörmuschel ausgebildeten Gehäusebereich mehrere Öffnungen (4) für den elektroakustischen Wandler (6) und mindestens eine Öffnung (15) für den akustischen Sensor (11) vorgesehen sind.

12. Gerät nach Anspruch 11, dadurch gekennzeichnet, dass der akustische Sensor (11) derart in seinem Raumvolumen (14) angeordnet ist, dass ein leeres Volumen zwischen akustischem Sensor und der mindestens einen Öffnung (15) gebildet ist.

13. Gerät nach einem der Ansprüche 5 bis 12 dadurch gekennzeichnet, dass es als Telefongerät ausgebildet ist.

14. Gerät nach einem der Ansprüche 5 bis 13, dadurch gekennzeichnet, dass es ein Sprechmikrofon (19) aufweist und eine Steuerschaltung, um eine Verstärkung bzw. Empfindlichkeit des Sprechmikrofons in Abhängigkeit vom gemessenen Schalldruck einzustellen.
